# EUROPÄISCHE PATENTSCHRIFT

(11) **EP 4 326 472 B1**
(45) Veröffentlichungstag und Bekanntmachung des Hinweises auf die Patenterteilung: **17.06.2026**
(21) Anmeldenummer: 22723584.3
(22) Anmeldetag: 19.04.2022
(51) Int. Cl.: B23F 1/04, B23F 5/12, B23Q 1/68, B23F 23/00, B23Q 15/007

(54) **VERFAHREN ZUM WÄLZSTOSSEN EINER PERIODISCHEN STRUKTUR, INSBESONDERE EINER VERZAHNUNG**
METHOD FOR GEAR SHAPING A PERIODIC STRUCTURE, IN PARTICULAR A GEAR
PROCÉDÉ DE FAÇONNAGE D'UNE STRUCTURE PÉRIODIQUE, EN PARTICULIER D'UNE DENTURE

(30) Priorität: 19.04.2021 DE 102021002058
(43) Veröffentlichungstag der Anmeldung: 28.02.2024
(73) Patentinhaber: GLEASON-PFAUTER MASCHINENFABRIK GMBH, 71636 Ludwigsburg (DE)
(72) Erfinder: KLEINBACH, Kurt, 71717 Beilstein (DE); ZAGHBIB, Amine, 71636 Ludwigsburg (DE); KERN, Simon, 71636 Ludwigsburg (DE); MAYER, Sven, 71636 Ludwigsburg (DE)
(74) Vertreter: Leinweber & Zimmermann
(86) Internationale Anmeldenummer: PCT/EP2022/060233
(87) Internationale Veröffentlichungsnummer: WO 2022/223513

(56) Entgegenhaltungen:
- DE-A1- 102019 004 299
- DE-B- 1 296 485
- US-B2- 9 868 169

## Beschreibung

Die Erfindung betrifft ein Verfahren zum Wälzstoßen einer periodischen Struktur, insbesondere einer Verzahnung an einem Werkstück, bei dem ein Abhebemechanismus das Stoßwerkzeug nach einer Bearbeitung im Arbeitshub für den Rückhub vom Werkstück abhebt, sowie auch einen Abhebemechanismus einer Wälzstoßmaschine.

Derartige Verfahren zum Wälzstoßen, insbesondere von Verzahnungen sind in der Technik bestens bekannt und beispielsweise in Thomas Bausch "Innovative Zahnradfertigung", 3. Auflage, S. 281 ff. in ihren Grundzügen beschrieben. Die Schnittgeschwindigkeit beim Wälzstoßen wird über eine im Wesentlichen Vertikalbewegung eines Stoßrads im Arbeitshub eines Hubzyklus erzeugt, welches mit der zu stoßenden Verzahnung in synchronisiertem Wälzeingriff steht. Zur Vermeidung eines Rückhubstreifens ist das Stoßrad jedoch im Rückhub (radial) von der Werkstückverzahnung abzuheben.

Das mit den Verfahren des Wälzfräsens und Wälzschälens konkurrierenden Wälzstoßen behauptet sich trotz höherer Bearbeitungszeiten gegenüber diesen Verfahren primär auf Gebieten, in denen sich das Wälzfräsen wenig eignet, beispielsweise für Innenverzahnungen, aber auch für Bereiche mit Störkonturen, für die sowohl das Wälzfräsen, als auch das Wälzschälen aufgrund des dort eingestellten Achskreuzwinkels weniger gut geeignet sind. Dennoch sind nicht zu geringe Hubzahlen erwünscht, um die Bearbeitungszeiten nicht zu lang zu halten.

Hinsichtlich des Abhebemechanismus hat sich am Markt die Technik des rotierenden Abhebenockens durchgesetzt. Ein gewünschtes Profil der Bahn aus Hub und Rückhub wird über die Profilierung des Abhebenockens erzeugt, welcher sich fortlaufend mit einer Drehzahl dreht, die der Hubzahl entspricht. Bei typischen Gestaltungen, wie etwa der in DE 10 2019 004 299 A1 beschriebenen, ist für den Arbeitshub eine Nockenprofilierung mit im Wesentlichen konstantem Durchmesser vorgesehen, und für den Rückhub ein Bereich sinkenden Durchmessers, gefolgt von einem Bereich ansteigenden Durchmessers zum Erreichen des Durchmessers des Arbeitshubs.

Zudem sind noch andere Abhebemechanismen bekannt geworden, die auf Linearmotoren basieren und durch eine komplexe Anordnung von biegbaren Platten eine Abhebung bewirken, wie etwa in US 2005/0129474 A1 beschrieben. Diese Variante hat sich jedoch, jedenfalls soweit erkennbar, am Markt nicht etablieren können. Bei dem in DE 10 2006 052 474 A1 offenbarten Abhebemechanismus wird eine Realisierung über Abhebenocken als nachteilig angesehen und stattdessen eine motorisch angetriebene Kurbelwelle gelehrt, die über einen Zwischenhebel mit dem Stoßkopf gekoppelt ist. Ausgehend von einer dem Arbeitshub entsprechenden Drehwinkelreferenzlage erfolgt die Steuerung der Abhebung direkt NC-gesteuert über den NC-Drehmotor. Auch diese Variante hat sich am Markt nicht in besonderem Maße durchsetzen können, jedenfalls nach Kenntnisstand der Anmelderin.

DE 1 296 485 B offenbart eine Zahnradstoßmaschine mit einem werkstückseitig vorgesehenen Abhebemechanismus, dessen Nocken so ausgebildet sein können, dass sich das Werkstück in der Tischebene auch während des Arbeitshubs bewegt, um Verzahnungen mit Verlauf nicht parallel zur Werkstückachse erzeugen zu können. DE 1 296 485 B offenbart ferner ein Verfahren zum Wälzstoßen einer periodischen Struktur gemäß dem Oberbegriff des Anspruchs 1.

US 9,868,169 B2 offenbart eine Wälzstoßmaschine mit einem in Abhängigkeit eines Drehwinkels eines Motors gesteuerten Drehwinkel eines weiteren Motors.

Der Erfindung liegt die Aufgabe zugrunde, ein Verfahren der eingangs genannten Art insbesondere im Hinblick auf eine Kombination aus zufriedenstellender Bearbeitungsgeschwindigkeit und zufriedenstellender Bearbeitungsgenauigkeit zu verbessern.

Diese Aufgabe wird verfahrenstechnisch durch ein Wälzstoßverfahren gemäß der eingangs genannten Art gelöst, das im Wesentlichen durch einen einem in einem Arbeitshubabschnitt eines Hubzyklus den Eingriffsabstand zwischen Stoßwerkzeug und Werkstück bestimmenden umfänglichen Nockenprofilbereich eines motorisch drehend angetriebenen Abhebenockens des Abhebemechanismus zugeordneten, während desselben Hubzyklus ein weiteres Mal, jedoch mit umgekehrtem Drehsinn durchlaufenen Drehwinkelbereich des Abhebenockens, gekennzeichnet ist.

Dabei beruht die Erfindung auf der Erkenntnis, dass trotz der Steuerung des Eingriffsabstands zwischen Stoßwerkzeug und Werkstück im Arbeitshub sowie der Abhebung des Stoßwerkzeugs vom Werkstück in der Abhebung durch das Profil des Abhebenockens (Abhebedrehnockens) eine Beeinflussung der Abhebebewegung erreicht werden kann, indem der Abhebenocken nicht wie üblich fortlaufend mit gleichen Drehsinn angetrieben wird, sondern die Drehrichtung wenigstens zweimal, insbesondere genau zweimal in einem Hubzyklus (also zweimal pro Doppelhub) wechselt. Dabei wird der Drehwinkelbereich, der dem Nockenprofilbereich im Arbeitshubabschnitt entspricht, wenigstens zweimal durchlaufen, also wenigstens ein zweites Mal mit umgekehrtem Drehsinn gegenüber einem ersten Mal. Bevorzugt ist dem Arbeitshubabschnitt ein Drehwinkelbereich der Abhebenocke zugeordnet, der bevorzugt wenigstens 5°, weiter bevorzugt wenigstens 10°, insbesondere wenigstens 20° beträgt und eine Abhebebewegung ausgehend von einem bereits auf eine bestimmte Winkelgeschwindigkeit beschleunigten Abhebenocken ermöglicht. Auch zugeordnete Drehwinkelbereiche von 25° oder mehr, sogar als 30° oder mehr sind möglich.

So kann der Drehwinkelbereich in dem Arbeitshubabschnitt (wenigstens bereichsweise) als azimutale Beschleunigungsstrecke eingesetzt werden. Die Winkelgeschwindigkeit des Abhebenockens beim Abheben soll dabei bevorzugt wenigstens 5 U/min betragen, weiter bevorzugt wenigstens 20 U/min, insbesondere wenigstens 35 U/min. Der Ausdruck "azimutal" bezieht sich hier und im Folgenden auf die Winkeldrehung (winkelbemessene Umfangsrichtung) des Drehnockens, es handelt sich somit um eine Winkelbeschleunigungsstrecke.

Es versteht sich, dass auch im Bereich des Rückhubs ein diesem zugeordneter Winkelbereich des Abhebenockens zweimal durchlaufen wird. Insoweit ist bevorzugt vorgesehen, dass es einen Bewegungsumkehrpunkt im Bereich des Rückhubs und einen Bewegungsumkehrpunkt im Bereich des Arbeitshubs gibt. Dies begünstigt eine hohe Ausnutzung der Hublänge für den Verzahnungseingriff. Grundsätzlich ist es kinematisch ansonsten auch denkbar, beide Umkehrpunkte in die Aufwärts- oder die Abwärtsbewegung des Stoßkopfes zu legen.

In einer Ausgestaltung kann der Nockenprofilbereich, dem der zweifach durchlaufende Drehwinkelbereich zugeordnet ist und der den Eingriffsabstand zwischen Stoßwerkzeug und Werkstück bestimmt, von konstantem Durchmesser sein. Doch auch Varianten, in denen auch dieser eingriffsbestimmende Nockenprofilbereich einen modulierten Durchmesser haben kann, beispielsweise für Flankenlinienmodifikationen der gestoßenen Verzahnung.

Bei der Verzahnung kann es sich bevorzugt um eine Innenverzahnung handeln, das Verfahren ist jedoch auch für Außenverzahnungen geeignet. Wie später noch detaillierter erläutert wird, kann mittels eines einzigen Nockens sogar eine Abhebebewegung für das Wälzstoßen von Innenverzahnungen wie auch eine Abhebebewegung für das Wälzstoßen von Außenverzahnungen realisiert werden.

In einer besonders bevorzugten Ausgestaltung ist die Azimutallage des rückhubseitigen Bewegungsumkehrpunkts (Winkellage des Umkehrpunkts) an der Abhebenocke veränderbar einstellbar und insbesondere in einem späteren Hubzyklus der Bearbeitung des Werkstückes auf eine einen geringeren Abhebebetrag bewirkende Lage eingestellt. Bei dieser Verfahrensgestaltung zeigt sich ein Vorteil der erfindungsgemäßen Gestaltung in der einfachen Erreichbarkeit unterschiedlicher Abhebebeträge, die nämlich dadurch erreichbar sind, dass der dem Rückhub zugeordnete Nockenprofilbereich wenigstens bereichsweise einen beim Durchlaufen in einer Drehrichtung ansteigenden und entsprechend beim Durchlaufen in der anderen Drehrichtung abfallenden Durchmesser (bzw. Radius) hat, in einer möglichen Ausführungsform somit einer insbesondere linearen Rampe darstellt, und der Bewegungsumkehrpunkt durch NC-Steuerung der Nockendrehung auf dieser Rampe weiter nach oben oder nach unten verlagert wird. Auf diese Weise kann beispielsweise eine Verzahnung, die in mehreren Umläufen (egal welcher Zustellstrategie) wälzgestoßen wird, in einer ersten Anzahl von Schrupphüben bei einem größeren Abhebebetrag im Rückhub gefahren und in einem Schlichthub oder einer zweiten Anzahl von Schlichthüben mit einer geringeren Abhebung im Rückhub, wodurch sich eine höhere Bearbeitungsgenauigkeit erzielen lässt. Es ist sogar denkbar, den Abhebebetrag im Rückhub eines jeden Hubzyklus (Doppelhubs) individuell und unterschiedlich einzustellen, z.B. in Abhängigkeit der im jeweiligen Arbeitshub gewählten Zustellung.

In einer einfachen Phasenbeziehung könnten die Umkehrpunkte der Hubbewegung zu den Umkehrpunkten der Nockendrehung um π/2 verschoben sein. Dann entspräche der arbeitshubseitige Bewegungsumkehrpunkt der Drehbewegung im Wesentlichen der mittigen Hublage und der rückhubseitige Umkehrpunkt der Nockendrehung der Mitte des Rückhubs. Es wird bevorzugt, dass man von dieser Phasenbeziehung um nicht mehr als 5π/12, bevorzugt nicht mehr als π/3, insbesondere nicht mehr als π/4 abweicht. In einer zusätzlichen oder alternativen Gestaltung ist jedoch gegenüber einer solchen Grundkonstellation mit π/2 Versatz eine zusätzliche Phasenverschiebung der Nockendrehung um bevorzugt wenigstens π/18, insbesondere π/9, insbesondere wenigstens π/6 oder sogar wenigstens π/4 in Richtung auf eine Verlagerung des rückhubseitigen Umkehrpunkts der Nockendrehung in Richtung auf das Ende der Rückhubbewegung einstellbar. Dies sorgt für eine Verlagerung der maximalen Abhebung hin auf das Höhenniveau der oberen Stirnseite der gestoßenen Verzahnung, wo Kollisionsgefahren besonders zu beachten sind.

In einer weiteren Gestaltungsmöglichkeit könnte der arbeitshubseitige Umkehrpunkt der Nockendrehung bezüglich des Hubs ebenfalls in Richtung auf die untere Stirnseite der gestoßenen Verzahnung verschoben werden, um eine azimutale Beschleunigungsstrecke zu vergrößern. Je nach Breite der gestoßenen Verzahnung (d.h. Verzahungsausdehnung in Hubachsrichtung) und insbesondere bei vergleichsweise breiteren Verzahnungen kann der bewegungsumkehrseitige Umkehrpunkt der Nockendrehung jedoch auch gleichphasig mit einem in Richtung auf die obere Stirnseite verschobenen rückhubseitigen Umkehrpunkt verschoben werden, um von einem symmetrischen Winkelabstand von π um möglichst nicht mehr als π/2, bevorzugt nicht mehr als π/3, weiter bevorzugt nicht mehr als π/4, insbesondere nicht mehr als π/6 abzuweichen. Dies erhöht die Laufruhe der Nockenbewegung.

Grundsätzlich ist es denkbar, den gesamten Drehwinkelbereich von 360° (2π) des Nockens mit einem Nockenprofilbereich für den Arbeitshub und einen Nockenprofilbereich für den Rückhub zu belegen, die je nach Ansteuerung nur zu einem Anteil genutzt werden, je nach gewünschter Abhebung. In einer weiteren bevorzugten Gestaltung ist jedoch vorgesehen, dass neben diesen Nockenprofilbereichen mit zugehörigem Drehwinkelbereich noch ein freier Drehwinkelbereich verbleibt, der für eine oder mehrere andersartige Nockenprofilierung genutzt werden und entsprechend eingesetzt werden kann.

Beispielsweise könnten drei Drehwinkelbereiche mit zugehörigen Nockenprofilbereichen vorgesehen sein, in einer einfachen Gestaltung ein Bereich mit konstantem Radius für einen Arbeitshub eines Wälzstoßens einer Außenverzahnung oder Innenverzahnung, einem Bereich für den Rückhub bei Wälzstoßen einer Außenverzahnung und einen Bereich für den Rückhub beim Wälzstoßen einer Innenverzahnung. Auf diese Weise müsste bei einem Bearbeitungswechsel von zu stoßenden Außenverzahnungen zu stoßenden Innenverzahnungen der Nocken nicht gewechselt werden. Die Möglichkeit, sowohl beim Wälzstoßen der Innenverzahnung als auch beim Wälzstoßen der Außenverzahnung den Abhebebetrag einstellen zu können, insbesondere stufenlos einstellen zu können, bleibt gemäß obiger Erläuterung erhalten. Es versteht sich, dass für dieses Beispiel auch jeweils ein getrennter Winkelbereich für den Arbeitshub für die Innenverzahnungsbearbeitung wie auch für die Außenverzahnungsbearbeitung vorgesehen werden könnte, eine gemeinschaftliche Nutzung beider Verfahren hinsichtlich des Arbeitshubs ist jedoch möglich.

Staucht man für dieses obige Beispiel die drei beschriebenen Segmente weiter, z.B. auf eine Gesamtausdehnung von 180° (π), ist es auch denkbar, auf dem gleichen Nocken noch eine Nockenprofilierung aufzubringen, mit der eine Radiusvariation auch im Arbeitshub realisierbar ist, für Flankenlinienmodifikationen der gestoßenen Verzahnung wie etwa einer Breitenballigkeit oder Konizität. Diese Gestaltungen können auch kombiniert werden, indem z.B. der zur Erzeugung einer Breitenballigkeit modifizierte Nockenprofilbereich wiederum für sowohl die Bearbeitung bei Innenverzahnungen wie auch bei Außenverzahnungen einsetzbar ist, indem zur einen bzw. anderen Seite entsprechende Profilierungen für den Rückhub vorgesehen sind.

Insoweit kann also vorgesehen werden, dass dieser dritte Azimutalbereich (Winkelbereich) jedenfalls bereichsweise ebenfalls für einen Abhebevorgang profiliert ist, jedoch mit einer unterschiedlichen Profilierung und insbesondere für einen Abhebevorgang eines anderen Werkstücktyps, anderen Werkstückes oder eines früheren oder späteren Hubzyklus des gleichen Werkstücks und/oder für einen Arbeitshub mit wenigstens zum Teil über diese Profilierung modifizierten Flankenmodifikationen der gestoßenen Verzahnung.

Betrachtet man den in einem Hubzyklus durchlaufenen Winkelbereich des Abhebenockens als Funktion der Zeit, so ist eine mit der Frequenz des Hubzyklus korrelierende periodische Funktion vorgesehen.

Besonders bevorzugt ist die zeitliche Ableitung dieser periodischen Funktion und insbesondere diese selbst sinusoidal oder eine modulierte Sinusoidale. Das heißt, eine sinusoidale 1. Ordnung ist dominant, bzw. innerhalb einer Periode sind wenigstens zwei Änderungen von einer Krümmungsrichtung auf die andere Krümmungsrichtung vorgesehen, es sind wenigstens zwei zusammenhängende Bereiche vorgesehen, in deren einem man oberhalb und in deren anderem unterhalb einer Mittenlinie liegt, und eine solche Mittenlinie wird wenigstens zweimal innerhalb einer Periode gequert. Ohne mögliche Zahnflankenmodifikationen könnte eine solche Funktion insbesondere auch einer exakten Sinusoidalen entsprechen, wobei wie oben bereits erläutert mit Amplitude, Phasenverschiebung und Nullpunktverschiebung für die Amplitude ohnehin noch drei Parameter für die Ansteuerung der Nockendrehung zur Verfügung stehen, um die Umkehrpunkte der Nockendrehung bezüglich der Phasenlage der Hubbewegung einzustellen. Im Übrigen ist auch vorgesehen, dass die Abhebebewegung wie auch der Nockendrehrichtungswechsel mit möglichst begrenztem/minimalem Ruck erfolgt. Hierzu ist bevorzugt vorgesehen, dass die periodische Funktion und insbesondere auch ihre Ableitung insbesondere zweimal stetig differenzierbar sind.

In einer weiteren bevorzugten Gestaltung ist vorgesehen, dass der Quotient aus maximaler Amplitude der Winkelgeschwindigkeit (zeitliche Ableitung der Funktion des Drehwinkels des Abhebenockens) und der Zykluszeit geringer ist als 24 U/min/s, bevorzugt als 16 U/min/s, insbesondere als 8 U/min/s. Auf diese Weise entstehen keine zu starken Beschleunigungen, die sich negativ auf die Bearbeitungsqualität auswirken könnten.

In einer weiteren bevorzugten Verfahrensgestaltung ist vorgesehen, dass die Hubzahl der Bearbeitung in Hübe pro Minute größer ist als 50, bevorzugt als 150, weiter bevorzugt als 200, insbesondere als 250. Aufgrund der oben erläuterten verfügbaren azimutalen Beschleunigungsstrecke kann trotz der Bewegungsrichtungsumkehr der Nockendrehung auch bei hohen Hubzahlen eine zuverlässige Abhebung bewerkstelligt und ein Rückhubstreifen verhindert werden. Es versteht sich, dass auch deutlich höhere Werte von 400 oder höher, 800 oder höher, sogar 1200 oder höher herangezogen werden können.

In einer weiteren bevorzugten Gestaltung beinhaltet die periodische Funktion des Winkels des Abhebenockens als Funktion der Zeit Modifikationen, die der Schaffung von Flankenlinienmodifikationen der gestoßenen Verzahnung dienen, auch in Form von z.B. (wenigstens) vier Krümmungswechsel innerhalb einer Periode. Auf diese Weise lässt sich eine Modulierung beispielsweise einer sinusoidalen Funktion bereitstellen, welche bei der Erzeugung einer nur in Verzahnungsmitte gewünschten Breitenballigkeit eine während des Arbeitshubs nicht konstante Hubgeschwindigkeit ausgleichen kann.

In einer bevorzugten konstruktiven Gestaltung zur Ausführung des Verfahrens ist vorgesehen, dass der Stoßkopf um eine Achse schwenkbar gelagert ist und die Abhebebewegung durch ein Verschwenken des Stoßkopfs erfolgt. Des Weiteren kann der Abhebemechanismus eine zwischen Abhebenocken und verschwenkbarem Stoßkopfbereich angeordnete und vorgespannte Andrückrolle aufweisen.

Die Erfindung betrifft auch ein Steuerprogramm mit Steueranweisungen, die, wenn auf einer Steuereinrichtung einer Wälzstoßmaschine ausgeführt, die Wälzstoßmaschine zur Durchführung eines Verfahrens nach einem der vorgenannten Aspekte steuert. Des Weiteren stellt die Erfindung auch bereit, eine Verwendung eines mit einem ersten umfänglichen Nockenprofilbereich zur Einstellung des Relativabstands zwischen Stoßrad und gestoßenem Werkstück in einer ersten Betriebsart und einem zweiten umfänglichen Nockenprofilbereich zur Einstellung einer solchen Relativlage in einer zweiten Betriebsart mit unterschiedlicher Bahnkurve der Relativbewegung gegenüber der der ersten Betriebsart ausgebildeten Abhebedrehnockens (10) eines Abhebemechanismus einer Wälzstoßmaschine in einem Verfahren nach einem der vorgenannten Aspekte. Wie weiter oben bereits erläutert, können diese unterschiedlichen, auf einem einzigen Abhebenocken realisierten Nockenprofilbereiche beispielsweise die Abhebebewegung beim Wälzstoßen einer Innenverzahnung gegenüber der einer Außenverzahnung beinhalten, einen modifizierten Arbeitshub beispielsweise für Modifikationen der gestoßenen Verzahnung, insbesondere Flankenlinienmodifikationen wie Balligkeit, Endrücknahme oder Konizität, oder auch Kombinationen hiervon.

Schließlich stellt die Erfindung auch bereit eine Wälzstoßmaschine mit einem Steuerprogramm zur Ausführung eines derartigen Verfahrens und/oder einem solchen Abhebenocken. Ein NC-gesteuerter Drehmotor zur Drehung des Drehnockens ist bevorzugt ein Synchronmotor, etwa einer mit Kupplung oder etwa ein Einbausynchronmotor, wie sie von einschlägigen Herstellern kommerziell erhältlich sind.

Weitere Merkmale, Einzelheiten und Vorteile der Erfindung ergeben sich aus der nachfolgenden Beschreibung mit Bezug auf die beigefügten Figuren, von denen
Fig. 1 eine erläuternde Darstellung von Nockenbewegungskurven ist,
Fig. 2 eine erläuternde Darstellung des Nockenwinkels als Funktion der Zeit ist,
Fig. 3 eine erläuternde Darstellung zweier Abhebebewegungen ist,
Fig. 4 eine schematische Darstellung eines Stoßkopfes mit Nocken ist,
Fig. 5 eine schematische Darstellung eines Nockens mit unterschiedlichen Nockensegmenten ist,
Fig. 6 eine erläuternde Darstellung einer Abhebebewegung der Nockenbereiche VI von Fig. 5 ist,
Fig. 7 eine erläuternde Darstellung einer Abhebebewegung zu dem Bereich VII von Fig. 5 ist,
Fig. 8 eine erläuternde Darstellung einer Abhebebewegung für den Bereich VIII von Fig. 5 ist, und
Fig. 9 eine erläuternde Darstellung einer Abhebebewegung für den Bereich IX von Fig. 5 ist.

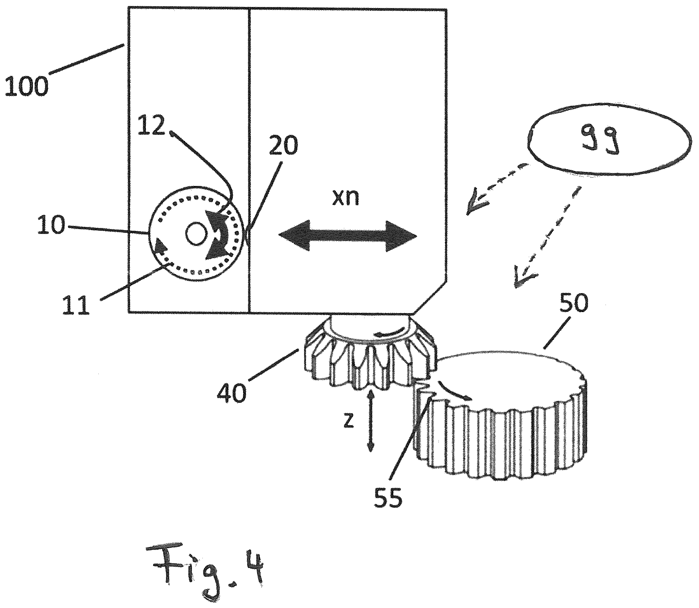

In Fig. 4 ist schematisch ein Stoßkopf 100 dargestellt, der ein Stoßrad 40 trägt, um eine Verzahnungsstoßbearbeitung zur Erzeugung einer Verzahnung 55 an einem Werkstück 50 vorzunehmen. Der Stoßkopf führt hierzu eine Hubbewegung entlang der durch den mit Bezugszeichen Z versehenen Doppelpfeil dargestellten Hubachse aus. Diese ist (nicht dargestellt) in einer bekannten Weise durch einen Kurbeltrieb bewirkt, dessen Stoßspindelachse (A-Achse) eine sich fortlaufend drehende rotatorische Achse ist. Eine beispielhafte Darstellung der Hubbewegung ist in Fig. 12 als α-Z Diagramm dargestellt.

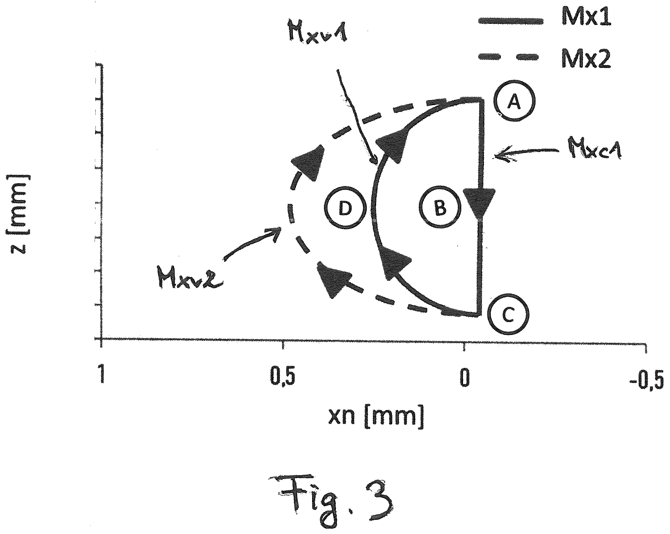

Ebenfalls nicht dargestellt in Fig. 4 ist eine Aufhängung des Stoßkopfes, aufgrund der eine Abhebebewegung, dargestellt durch den Doppelpfeil mit Bezugszeichen xn zur Vermeidung von Rückhub-Kollisionen ermöglicht ist. Der Abhebebetrag richtet sich nach dem Durchmesser (bzw. Radius) des profilierten Nockens 10, der sich in Fig. 4 in der 3-Uhr-Winkelposition in Anlage mit einer vorgespannten Andrückrolle 20 befindet, von der in Fig. 4 nur ein nockennaher Bereich dargestellt ist. Der Aufbau des Stoßkopfes könnte so wie in Fig. 3 der DE 10 2019 004 429 gestaltet sein, die hinsichtlich dieses Grundaufbaus durch Referenz einbezogen ist.

Als gepunkteter Pfeil 11 ist in Fig. 4 der Drehsinn der im Stand der Technik herangezogenen fortlaufenden Drehung des Nockens eingezeichnet, der synchronisiert mit der Hubbewegung die Abhebebewegung steuert. Die Steuerung der Nockendrehung wie auch der anderen Maschinenachsen erfolgt CNC-gesteuert, eine Steuerung hierzu ist in Fig. 4 mit dem Bezugszeichen 99 versehen angedeutet.

Im Gegensatz hierzu ist die bei dem erfindungsgemäßen Verfahren herangezogene Nockendrehbewegung durch Drehdoppelpfeil 12 dargestellt. Die Nockendrehung erfolgt somit nicht fortlaufend mit gleichbleibender Drehrichtung, vielmehr wird die Drehrichtung während eines (Doppel-)Hubes geändert und ein Winkelbereich in einem (Doppel-)Hub mehr als einmal durchlaufen, im vorliegenden Ausführungsbeispiel genau zweimal, und zwar mit jedenfalls unterschiedlichen Drehrichtungen des Drehnockens.

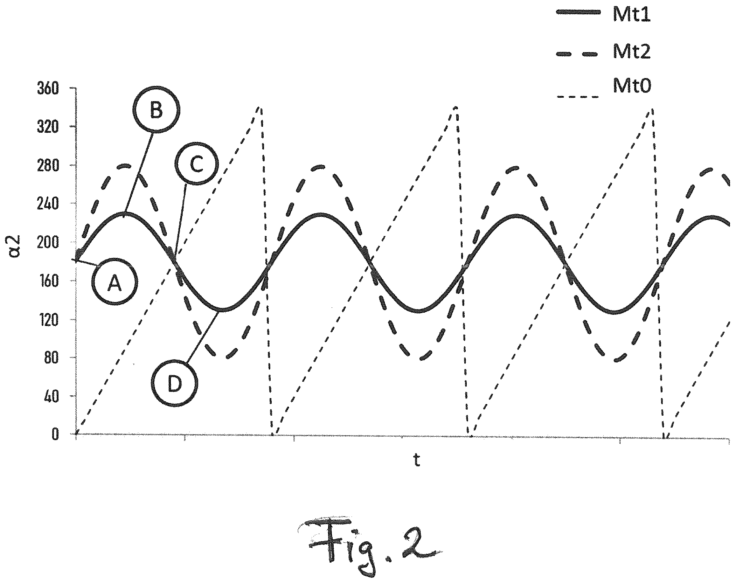

In einer zeitlichen Darstellung wie der von Fig. 2, die sich über etwas mehr als drei vollständige Doppelhübe erstreckt, ist dies am Beispiel der fettgedruckten durchgezogenen Kurve Mt1 im Vergleich zur dünnen gestrichelten Kurve Mt0 des Standes der Technik gut zu erkennen. Die sägezahnartige Darstellung der Kurve Mt0 aus dem Stand der Technik ist dabei dem Umstand geschuldet, dass nach einer vollen Drehung des Nockens 10 die Winkelzählung wieder bei der mit der 360°-Position übereinstimmenden Nullposition beginnt. Für die Kurve Mt1 einer ersten Ansteuerung wird dagegen für das gezeigte Beispiel nur ein Winkelbereich von hier ca. 100° überstrichen, als periodische Funktion der Zeit mit einer der Periode des Doppelhubs entsprechenden Periodendauer, und in diesem Ausführungsbeispiel in Gestalt einer sinusoidalen Kurve.

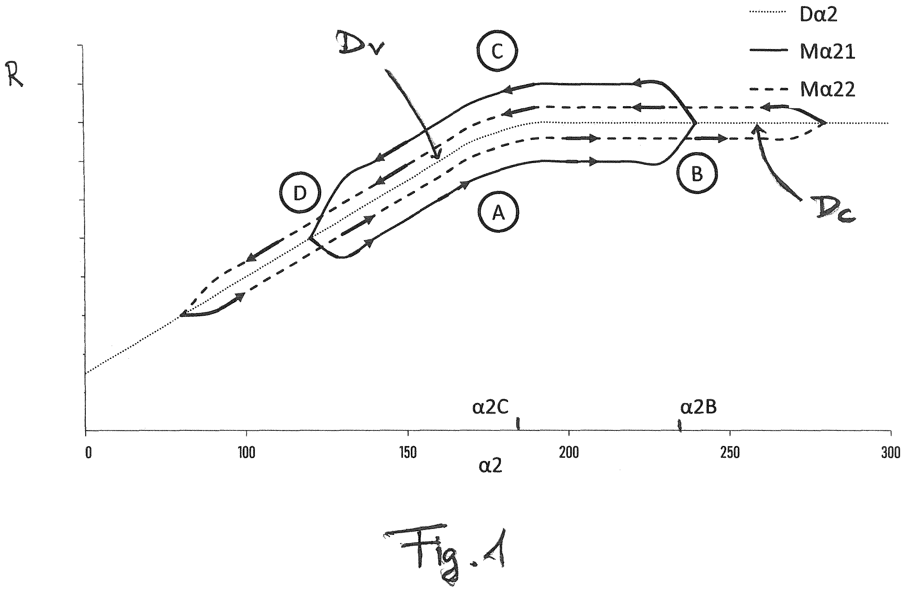

In Fig. 1 ist die Bewegung entsprechend Kurve Mt1 aus Fig. 2 in einer Darstellung wiedergegeben, in der der Nockenradius als Funktion des Nockenwinkels α2 aufgetragen ist. Die gepunktete Kurve Dα2 gibt das Profil des Nockens in dem betrachteten Drehwinkelbereich wieder. Es hat einen Bereich konstanten Radius Dc sowie einen Bereich Dv, in welchem sich der Radius in Abhängigkeit des Nockenwinkels α2 verringert. Zu Darstellungszwecken und Kenntlichmachung der unterschiedlichen Drehrichtungen ist die Kurve Mα21 entsprechend der Bewegung Mt1 in Fig. 2 für die eine Drehrichtung unterhalb und die andere Drehrichtung oberhalb der Nockenkurve Dα2 dargestellt, tatsächlich liegt die Kurve Mα21 selbstverständlich auf der Nockenkurve Dα2. Die Auswirkungen der Bahnen Mt1 und Mα21 aus den Figuren 2 und 1 auf die Abhebebewegung lassen sich am besten anhand der Darstellung von Fig. 3 über die auch in Fig. 1 und 2 eingezeichneten Momentsituationen A, B, C und D erkennen.

Momentsituation A beschreibt den Beginn der Bewegung ohne Abhebung als Arbeitshub, der bei C endet. Während des Arbeitshubs soll (bei angenommener nicht vorgesehener Breitenballigkeit oder konischer oder anderer Flankenlinienmodifikation) der Radialabstand von Stoßrad 40 zu Werkstück 50 im Bearbeitungseingriff konstant sein, entsprechend wird die Kurve Mα21 aus Fig. 2 im Bereich Dc des konstanten Nockenradius durchlaufen, und zwar vom Übergang des variierenden Radiusbereichs Dv zum konstanten Radiusbereich Dc über Momentsituation B, in welchem die Drehgeschwindigkeit des Nockens nach Abbremsen auf Null verringert wird und dann bei umgekehrter Drehrichtung wieder steigt. Dabei spielt es im Arbeitshub (ohne Modifikationen) positionsmäßig eine untergeordnete Rolle, an welchem Punkt der Kurve Mα21 man sich befindet. Die Ansteuerung der Winkelgeschwindigkeit ω2 (= dα2/dt) ist daher durchaus variabel, und der "Umkehrpunkt" B mit ω2=0 im Bereich Dc muss nicht wie in Fig. 3 dargestellt in der Hubmitte liegen, sondern kann, in Entsprechung einer Phasenverschiebung bezüglich Fig. 2, auf einer anderen als der mittigen Lage in Hubachsrichtung Z liegen.

Der Winkelbereich [α2B; α2C] aus Fig. 1 zwischen den Momentsituationen B und C kann als Beschleunigungsstrecke herangezogen werden, so dass die beginnende Abhebebewegung ausgehend von Momentsituation C erfolgt, wenn die Winkelgeschwindigkeit des Nockens bereits einen vergleichsweise hohen Wert, insbesondere nahe seines Maximalwerts haben kann. Es versteht sich jedoch auch hier, dass durch NC-Ansteuerung der Achse α2 die Maximalgeschwindigkeit des Nockens bezüglich der Abhebebewegung aus Fig. 3 auch verschoben werden kann, beispielsweise müsste die Winkelgeschwindigkeit ω2 nicht bereits ab dem Moment der beginnenden Abhebung zu sinken beginnen, sondern könnte auch noch kurz ansteigen, um dann zu sinken, und ab Momentsituation D, dem anderen "Umkehrpunkt" hinsichtlich der Drehrichtung der Winkelgeschwindigkeit, wieder zu steigen. In Fig. 3 ist der Umkehrpunkt D, der gemäß Fig. 1 bei dem gewählten Nockenprofil Dα2 der maximalen Abhebung entspricht, auch in der Mitte der axialen Bewegung Z eingezeichnet, dieser könnte jedoch ebenso gut in Richtung auf z.B. das Ende der Rückhubbewegung Mxv1 verlagert werden. Mit Nockendrehung vom Umkehrpunkt D zum Übergang des Bereichs Dv in Dc bei Momentsituation A in Fig. 1 endet die Abhebung, und man gelangt wieder zum Ausgangspunkt der Betrachtung.

In Fig. 3 ist noch eine weitere Abhebebewegung Mx2 dargestellt, die im Arbeitshub (Mxc2) mit der Bewegung Mxc1 der soeben diskutierten Abhebebewegung Mx1 (mit Rückhub Mxv1) übereinstimmt, im Rückhub jedoch, wie durch die gestrichelte Bahnbewegung erkennbar um einen vergleichsweise größeren Abhebebetrag abgehoben wird. Dies wird erreicht, indem mittels der NC-Steuerung 99 der Nocken (Nockenwinkel α2) über den Bereich des "Umkehrpunkts" D der zuvor beschriebenen Bewegung Mα21 in Fig. 1 hinaus gedreht wird, und somit zwischen den Momentsituationen C und A (über D) ein größerer Winkelbereich im Bereich Dv mit variablem Nockenradius zunächst in der einen und dann in der anderen Drehrichtung durchlaufen wird. Demnach erlaubt, wie aus Fig. 2 erkennbar, die Einstellung einer größeren Amplitude für Kurve Mt2 bezüglich der Kurve Mt1 eine größere Abhebung. Bei der Bahnkurve Mα22 in Fig. 1 wird auch im Bereich Dc des konstanten Nockenradius ein größerer Winkelbereich durchlaufen. Hier versteht es sich jedoch wieder, dass die Positionierung des "Umkehrpunkts" B entlang des Bereichs Dc keinen Einfluss auf den Radialabstand zwischen Stoßrad 40 und Werkstück 50 hat und somit grundsätzlich auch veränderbar ist (entsprechend einer Verschiebung nebst Streckung/Stauchung der Kurven aus Fig. 2 in Richtung der Vertikalachse).

Demnach können mit dem gleichen Nocken, d.h. ohne Nockenwechsel, unterschiedliche Abhebebahnen realisiert werden und zudem die Abhebebewegung nach Durchlaufen einer Beschleunigungswinkelstrecke realisiert werden.

Zur Ausführung der Abhebebewegung bedarf es zudem nicht des vollen Umfangbereichs des Abhebenockens, so lässt sich der in den Figuren 1 und 2 zu Erläuterungszwecken dargestellte Winkelbereich von etwa 100° für die Kurven/Bahnen Mt1/Mα21 und etwa 200° für Mt2/Mα22 durchaus noch verringern. Damit sind in einem weiterführenden Aspekt der Erfindung auch Abhebenocken realisierbar, die unterschiedliche Profilierbereiche zur Durchführung von (über die oben erläuterte Amplitudeneinstellung hinausgehende) unterschiedliche Abhebebewegungen und/oder Modulierungen des Arbeitshubs aufweisen.

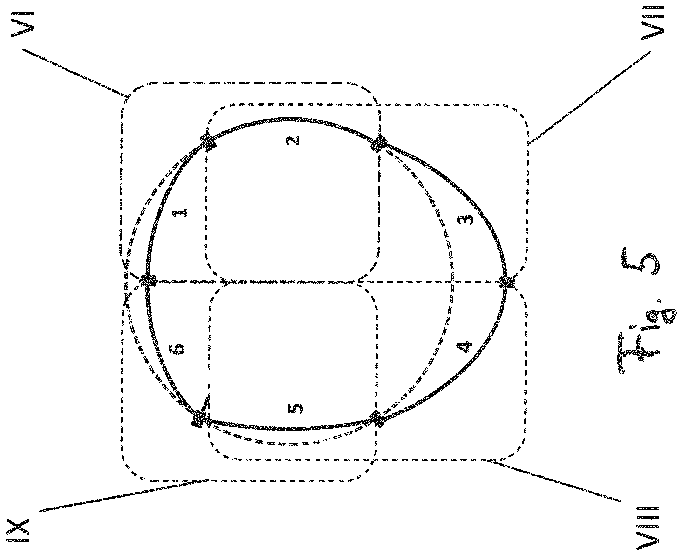

Dies wird nachfolgend ausgehend von Fig. 5 erläutert, die in einer sehr stark übertriebenen Darstellung die Profilierung eines Nockens in unterschiedlichen Segmenten 1 bis 6 zeigt. Betrachtet werden, unter Rückgriff auf Darstellung von Winkelpositionen als Uhrzeiten, ein erstes Segment 1 zwischen 0-Uhr-Position und 2-Uhr-Position, ein zweites Segment 2 zwischen 2-Uhr-Position und 4-Uhr-Position, ein drittes Segment 3 zwischen 4-Uhr-Position und 6-Uhr-Position, ein viertes Segment 4 zwischen 6-Uhr-Position und 8-Uhr-Position, ein fünftes Segment 5 zwischen 8-Uhr-Position und 10-Uhr-Position und ein sechstes Segment 6 zwischen 10-Uhr-Position und 12-(=0)Uhr-Position.

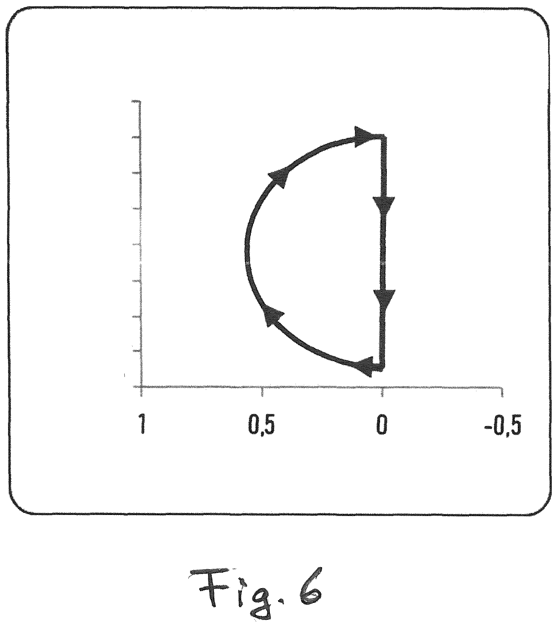

Das Segment 2 hat konstanten Radius und entspricht dem Bereich Dc von Fig. 1. Segment 1 hat einen im Gegenuhrzeigersinn abnehmenden Radius und entspricht dem Bereich Dv aus Fig. 1. Die beiden Segmente 1 und 2, in Fig. 5 zusammengefasst als Bereich VI, können für das Wälzstoßen von Außenverzahnungen wie in Fig. 6 gezeigt, herangezogen werden, es ergibt sich eine Abhebebewegung vom Typ der Abhebebewegung Mx1 oder Mx2 gemäß Fig. 3, wobei wiederum über NC-Ansteuerung (z.B. Amplitudeneinstellung gemäß Fig. 2) unterschiedliche Abhebebeträge einstellbar sind, die wie oben anhand von Fig. 3 erläutert, zudem über die Positionierung des Umkehrpunkts D kontinuierlich einstellbar sind.

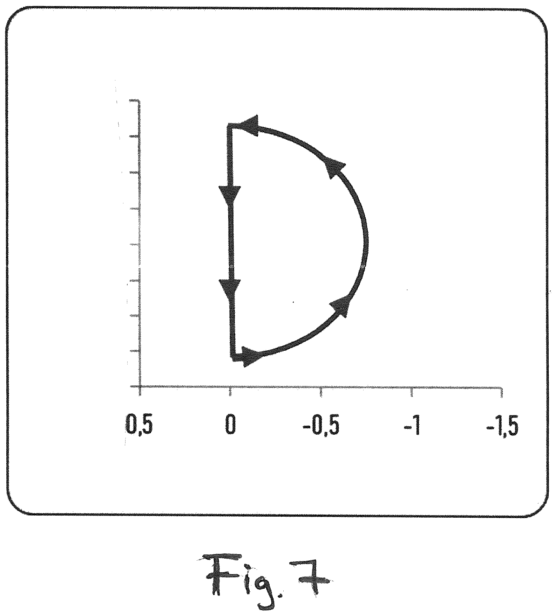

Das Segment 2 kann jedoch auch für Wälzstoßen von Innenverzahnungen herangezogen werden, bei dem die Abhebebewegung in Radialrichtung gegenüber der bei Wälzstoßen einer Außenverzahnung in entgegengesetzter Richtung zu erfolgen hat. Hierzu ist Segment 3 vorgesehen, das zur anderen Seite als Segment 1 an Segment 2 anschließt und einen Bereich von im Uhrzeigersinn ansteigenden Nockenradius aufweist. Der Bereich von Segment 2 und Segment 3, in Fig. 5 mit VII bezeichnet, kann somit für das Wälzstoßen von Innenverzahnungen herangezogen werden, die entsprechende Abhebebewegung ist in Fig. 7 dargestellt. Auch hier lassen sich die anhand der Figuren 1 bis 3 erläuterten Variationen der Abhebebewegung insbesondere hinsichtlich des Abhebebetrags einstellen, da neben der Festlegung des doppelt (mit unterschiedlichen Drehrichtungen) durchlaufenen Winkelbereichs des Nockens durch NC-gesteuerte Einstellung der Winkelgeschwindigkeit weitere Freiheiten darin bestehen, mit welchen Geschwindigkeiten diese Bahnen durchlaufen werden (Variation der Form der Kurve Mt1 in Fig. 2).

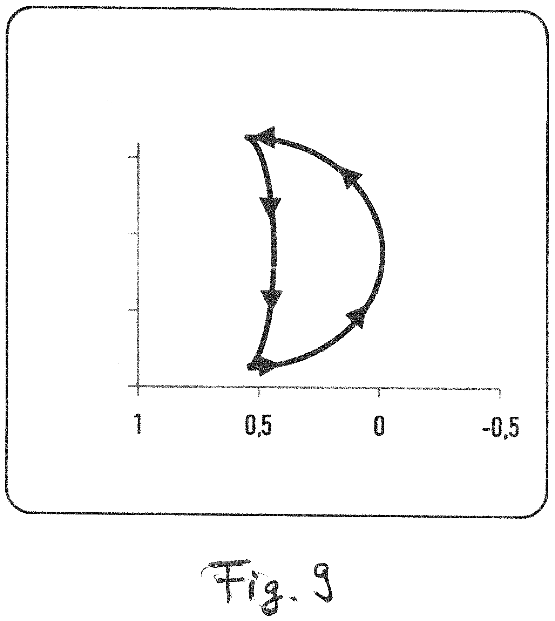

Der verbleibende Winkelbereich des Nockens mit den Segmenten 4, 5 und 6 kann dazu herangezogen werden, wie in Fig. 5 dargestellt, topologische Modifikationen der Verzahnungsgeometrie des Werkstücks 50 zu realisieren. Dies wird zunächst am Beispiel einer Flankenlinienballigkeit oder Breitenballigkeit erläutert. Mit Segment 6 ist ein zu Segment 1 spiegelbildliches Nockenprofil geschaffen, d.h. ein Bereich mit bei Drehung im Gegenuhrzeigersinn steigenden Nockenradius. Dieses schließt an Segment 5 an, welches jedoch keinen konstanten Radius mehr aufweist, sondern so gestaltet ist, dass zunächst von Segment 6 kommend bei weiterer Drehung der Radius zunächst verringert wird und dann etwa ab Hälfte des dem Segments 5 zugeordneten Winkelbereichs wieder zunimmt. Auch hier ist die Darstellung der Abweichung von konstantem Durchmesser (symbolisiert durch die doppelt gestrichelte Linie) zu Erläuterungszwecken völlig übertrieben dargestellt. Die Segmente 5 und 6, in Fig. 5 mit IX zusammengefasst, werden gemeinsam für das Wälzstoßen einer Außenverzahnung mit breitenballiger Verzahnungsmodifikation eingesetzt. Die hierzu gehörige Abhebebewegung ist in Fig. 9 dargestellt. Im Vergleich zu Fig. 6 erkennt man die vergleichsweise geringe ballige Abhebung auch im Arbeitshub.

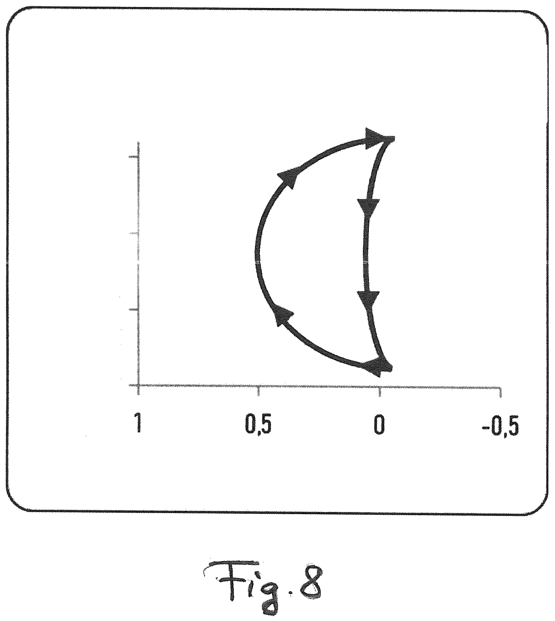

Schließlich ist das spiegelbildlich zu Segment 3 gestaltete Segment 4 gemeinsam mit Segment 5, wie in Fig. 5 mit VIII dargestellt, zum Wälzstoßen einer breitenballigen Innenverzahnung nutzbar. Die zugehörige Abhebebewegung ist in Fig. 8 dargestellt.

Für dieses Ausführungsbeispiel einer Balligkeit kann weiterhin der Abhebebetrag der Abhebung im Rückhub über den überstrichenen Winkelbereich in den Segmenten 4 (Fig. 8), 6 (Fig. 9), 3 (Fig. 7) und 1 (Fig. 6) eingestellt werden.

Die anhand der Figuren 1 bis 3 dargestellten unterschiedlichen Abhebebewegungen mit unterschiedlichen Abhebebeträgen können nicht nur bei dem Verzahnungsstoßen unterschiedlicher Werkstücke eingesetzt werden, sondern auch für ein Verzahnungsstoßen ein und desselben Werkstücks, indem beispielsweise die Abhebebahn im Rückhub Mxv2 aus Fig. 3 für die Rückhübe bei Schupp-Bearbeitungshüben herangezogen werden, und für einen oder mehrere Schlicht-Bearbeitungshübe durch Verschiebung des Umkehrpunkts bzw. der Momentsituation D in Richtung auf den Bereich Dc konstanten Nockenradius eine geringere Abhebung im Rückhub nach dem ein oder mehreren Schlicht-Bearbeitungsdurchgängen eingestellt wird. Es versteht sich, dass sich alternativ oder zusätzlich zu einer Balligkeit auch andere, nicht explizit dargestellte Flankenlinienmodifikationen wie Konizitäten oder Endrücknahmen durch eine Modifizierung eines Umfangsbereichs des Drehnockens realisieren lassen.

Wie aus der obigen detaillierten Beschreibung der Erfindung erkennbar, wird eine Flexibilität beim Wälzstoßen nochmals erhöht, und auch Nebenzeiten können verringert werden, die andernfalls durch Ausbau und Einbau eines anderen Nockens anfallen würden.

Im Übrigen ist die Erfindung nicht auf die in der obigen Beschreibung dargestellten Einzelheiten eingeschränkt. Vielmehr können die einzelnen Merkmale der obigen Beschreibung sowie der nachstehenden Ansprüche einzeln oder in Kombination für die Verwirklichung der Erfindung in ihren verschiedenen Ausführungsformen wesentlich sein.

## Patentansprüche

1. Verfahren zum Wälzstoßen einer periodischen Struktur, insbesondere einer Verzahnung (55) an einem Werkstück (50), bei dem ein Abhebemechanismus (10, 20) das Stoßwerkzeug (40) nach einer Bearbeitung im Arbeitshub (Mxc1) für den Rückhub (Mxv1) vom Werkstück abhebt,
**gekennzeichnet durch** einen einem in einem Arbeitshubabschnitt eines Hubzyklus den Eingriffsabstand zwischen Stoßwerkzeug und Werkstück bestimmenden umfänglichen Nockenprofilbereich (DcF; 2) eines motorisch drehend angetriebenen Abhebenockens (10) des Abhebemechanismus zugeordneten, während desselben Hubzyklus ein weiteres Mal, jedoch mit umgekehrtem Drehsinn durchlaufenen Drehwinkelbereich ([α2B;α2C]) des Abhebenockens.

2. Verfahren nach Anspruch 1, bei dem der Drehwinkelbereich in dem Arbeitshubabschnitt wenigstens bereichsweise als azimutale Beschleunigungsstrecke eingesetzt wird.

3. Verfahren nach Anspruch 1 oder 2, mit einem Bewegungsumkehrpunkt (D) im Bereich des Rückhubs und/oder einem Bewegungsumkehrpunkt (B) im Bereich des Arbeitshubs.

4. Verfahren nach einem der vorhergehenden Ansprüche, bei dem die Azimutallage eines rückhubseitigen Bewegungsumkehrpunkts an der Abhebenocke veränderbar einstellbar ist und insbesondere in einem späteren Hubzyklus der Bearbeitung eines Werkstückes auf eine einen geringeren Abhebebetrag bewirkende Lage eingestellt wird.

5. Verfahren nach einem der vorhergehenden Ansprüche, bei dem die Azimutallage des rückhubseitigen Bewegungsumkehrpunkts gegenüber der axialen Mitte des Rückhubs phasenverschoben ist, bevorzugt um wenigstens π/18, insbesondere wenigstens π/12 und bevorzugt in Richtung auf das Rückhubende.

6. Verfahren nach einem der vorhergehenden Ansprüche, bei dem ein dem Rückhub zugeordneter und die Abhebung bestimmende umfängliche Nockenprofilbereich des Abhebenockens zusammen mit dem dem Arbeitshub zugeordneten Nockenprofilbereich eine azimutale Gesamtausdehnung um weniger als 360°, insbesondere weniger als 240° aufweist und somit ein dritter Azimutalbereich durch diese nicht belegt ist.

7. Verfahren nach Anspruch 6, bei dem der dritte Azimutalbereich jedenfalls bereichsweise ebenfalls für einen Abhebevorgang profiliert ist, jedoch mit einer unterschiedlichen Profilierung und insbesondere für einen Abhebevorgang eines anderen Werkstücktyps, anderen Werkstücks oder eines früheren oder späteren Hubzyklus des gleichen Werkstücks und/oder für einen Arbeitshub mit wenigstens zum Teil über diese Profilierung modifizierten Flankenmodifikation der gestoßenen periodischen Struktur.

8. Verfahren nach einem der vorhergehenden Ansprüche, bei dem der in einem Hubzyklus durchlaufende Winkelbereich des Abhebenockens als Funktion der Zeit eine mit der Frequenz des Hubzyklus korrelierende periodische Funktion ist, und bei dem insbesondere die zeitliche Ableitung der periodischen Funktion und insbesondere diese selbst sinusoidal oder eine modulierte Sinusoidale ist.

9. Verfahren nach einem der vorhergehenden Ansprüche, bei dem der Quotient aus maximaler Amplitude der Winkelgeschwindigkeit und der Zykluszeit, bemessen in U/min/s, geringer ist als 24, bevorzugt als 16, insbesondere als 8 und/oder bei dem die Hubzahl, in Hübe/min, größer ist als 50, bevorzugt als 150, insbesondere als 200.

10. Verfahren nach einem der vorhergehenden Ansprüche, bei dem die periodische Funktion des Winkels des Abhebenockens als Funktion der Zeit vier Krümmungsrichtungswechsel in einer Periode beinhaltet.

11. Verfahren nach einem der vorhergehenden Ansprüche, bei dem der Stoßkopf um eine Achse schwenkbar gelagert ist und die Abhebebewegung durch ein Verschwenken des Stoßkopfes erfolgt, und/oder bei dem der Abhebemechanismus eine zwischen Abhebenocken und Stoßkopf angeordnete und vorgespannte Andrückrolle aufweist.

12. Steuerprogramm mit Steueranweisungen, die, wenn auf einer Steuereinrichtung (99) einer Wälzstoßmaschine ausgeführt, die Wälzstoßmaschine zur Durchführung eines Verfahrens nach einem der vorhergehenden Ansprüche steuert.

13. Verwendung eines mit einem ersten umfänglichen Nockenprofilbereich (1, 2) zur Einstellung des Relativabstands zwischen Stoßrad und gestoßenem Werkstück in einer ersten Betriebsart und einem zweiten umfänglichen Nockenprofilbereich (2, 3; 1, 6) zur Einstellung einer solchen Relativlage in einer zweiten Betriebsart unterschiedlicher Bahnkurve der Relativbewegung gegenüber der der ersten Betriebsart ausgebildeten Abhebedrehnockens (10) eines Abhebemechanismus einer Wälzstoßmaschine in einem Verfahren nach einem der Ansprüche 1 bis 11.

14. Verwendung nach Anspruch 13, wobei der Abhebedrehnocken wenigstens einen zur Erzeugung einer Flankenlinienmodifikation modifizierten Nockenprofilbereich (5) mit nicht-konstantem Radius aufweist.

15. Wälzstoßmaschine mit einer Steuerung, die ein Steuerprogramm nach Anspruch 12 aufweist und zur Durchführung eines Verfahrens nach einem der Ansprüche 1 bis 11 ausgelegt ist und insbesondere einen Abhebedrehnocken gemäß einer Verwendung nach Anspruch 13 oder 14 verwendet.

## Claims

1. A method for shaping a periodic structure, in particular toothing (55) on a workpiece (50), in which, after a machining operation within the working stroke (Mxc1), a lifting mechanism (10, 20) lifts the shaping tool (40) off the workpiece in readiness for the return stroke (Mxv1),
**characterised by** a rotational angular region ([α2B; α2C]) of a lifting cam of the lifting cam (10) of the lifting mechanism, which lifting cam is driven rotationally by means of a motor and is associated with a circumferential cam profile region (DcF; 2) of said cam profile region that determines the engagement distance between the shaping tool and the workpiece in a working stroke portion of a stroke cycle, has a rotational angular region ([α2B; α2C]) which is passed through a further time during the same stroke cycle, albeit in the opposite direction of rotation.

2. The method according to claim 1, wherein at least regions of the rotational angular region in the working stroke portion are used as an azimuthal acceleration path.

3. The method according to claim 1 or 2, having a movement reversal point (D) in the region of the return stroke and/or a movement reversal point (B) in the region of the working stroke.

4. The method according to one of the preceding claims, wherein the azimuthal position of a movement reversal point on the return stroke side on the lifting cam can be variably adjusted and, in particular in a later stroke cycle of the machining of a workpiece, is adjusted to a position resulting in a lower degree of lifting.

5. The method according to one of the preceding claims, wherein the azimuthal position of the movement reversal point on the return stroke side is phase-shifted relative to the axial centre of the return stroke, preferably by at least π/18, in particular by π/12, and preferably in the direction of the return stroke end.

6. The method according to one of the preceding claims, wherein a circumferential cam profile region of the lifting cam associated with the return stroke and determining the lifting movement, together with the cam profile region associated with the working stroke, has an azimuthal overall extension of less than 360°, in particular less than 240°, and as such does not cover a third azimuthal region.

7. The method according to claim 6, wherein the third azimuthal region is in any case also profiled in some regions for a lifting process, but with a different profiling and in particular for a lifting process of another workpiece type, another workpiece, or an earlier or later stroke cycle of the same workpiece and/or for a working stroke having a flank modification of the shaped periodic structure that is modified at least in part via this profiling.

8. The method according to one of the preceding claims, wherein the angular region of the lifting cam, passed through in a stroke cycle, is, as a function of time, a periodic function which correlates with the frequency of the stroke cycle, and wherein in particular the time derivative of the periodic function and in particular the periodic function itself is sinusoidal or is a modulated sinusoidal wave.

9. The method according to one of the preceding claims, wherein the quotient of the maximum amplitude of the angular velocity and the cycle time, measured in U/min/s, is less than 24, preferably less than 16, in particular less than 8, and/or wherein the stroke rate, in strokes/min, is greater than 50, preferably greater than 150, in particular greater than 200.

10. The method according to one of the preceding claims, wherein the periodic function of the angle of the lifting cam, as a function of time, includes four changes in the direction of curvature in a single period.

11. The method according to one of the preceding claims, wherein the shaping head is mounted pivotably around an axis and the lifting movement is effected by pivoting the shaping head, and/or wherein the lifting mechanism comprises a preloaded pressure roller arranged between the lifting cam and shaping head.

12. A control program comprising control instructions which, when executed on a control device (99) of a shaping machine, controls the shaping machine so as to carry out a method according to one of the preceding claims.

13. A use of a rotary lifting cam (10) of a lifting mechanism of a shaping machine in a method according to any of 1 to 11, said rotary lifting cam being configured with a first circumferential cam profile region (1, 2) for adjusting the relative distance between the shaper cutter and the shaped workpiece in a first operating mode, and a second circumferential cam profile region (2, 3; 1, 6) for adjusting such a relative position in a second operating mode with a different path curve of the relative movement compared to the first operating mode.

14. The use according to claim 13, wherein the rotary lifting cam comprises at least one cam profile region (5) which is modified for producing a flank line modification and has a non-constant radius.

15. A shaping machine having a controller which comprises a control program according to claim 12 and is configured so as to carry out a method according to one of claims 1 to 11 and in particular uses a rotary lifting cam in accordance with a use according to claim 13 or 14.

## Revendications

1. Procédé de mortaisage par génération d'une structure périodique, notamment d'une denture (55) sur une pièce à usiner (50), dans lequel un mécanisme de levage (10, 20) soulève l'outil de mortaisage (40) par rapport à la pièce à usiner après un usinage en course de travail (Mxc1) en vue de la course de retour (Mxv1),
**caractérisé en ce qu'**une came de levage rotative (10) du mécanisme de levage, qui est mise en rotation par un moteur et est associée à une région de profil circonférentielle (DcF ; 2) de ladite came de levage qui détermine la distance de prise entre l'outil de mortaisage et la pièce à usiner dans une section de course de travail d'un cycle de course, présente une région d'angle de rotation ([α2B ; α2C]) qui est parcourue une fois de plus au cours du même cycle de course, mais avec un sens de rotation opposé.

2. Procédé selon la revendication 1, dans lequel la région d'angle de rotation dans la section de course de travail est utilisée, au moins par sections, comme tronçon d'accélération azimutale.

3. Procédé selon la revendication 1 ou 2, comprenant un point d'inversion du mouvement (D) dans la région de la course de retour et/ou un point d'inversion du mouvement (B) dans la région de la course de travail.

4. Procédé selon l'une des revendications précédentes, dans lequel la position azimutale d'un point d'inversion du mouvement, côté course de retour, sur la came de levage est réglable de manière modifiable et est notamment réglée, lors d'un cycle de course ultérieur de l'usinage d'une pièce, sur une position entraînant une moindre quantité de levage.

5. Procédé selon l'une des revendications précédentes, dans lequel la position azimutale du point d'inversion du mouvement, côté course de retour, est déphasée par rapport au centre axial de la course de retour, de préférence d'au moins π/18, notamment d'au moins π/12 et de préférence en direction de la fin de la course de retour.

6. Procédé selon l'une des revendications précédentes, dans lequel une région de profil circonférentielle de la came de levage, qui est associée à la course de retour et qui détermine le levage, conjointement avec la région de profil de la came qui est associée à la course de travail, présente une étendue azimutale totale inférieure à 360°, notamment inférieure à 240°, avec pour conséquence qu'une troisième région azimutale n'est pas occupée par celles-ci.

7. Procédé selon la revendication 6, dans lequel la troisième région azimutale est également profilée, et ce par sections, pour une opération de levage - toutefois avec un profilage différent - et notamment pour une opération de levage d'un autre type de pièce, d'une autre pièce à usiner ou d'un cycle de course antérieur ou postérieur concernant la même pièce à usiner et/ou pour une course de travail présentant une modification de flanc de la structure périodique façonnée qui est au moins partiellement modifiée par ce profilage.

8. Procédé selon l'une des revendications précédentes, dans lequel la région d'angle de la came de levage, qui est parcourue lors d'un cycle de course, en fonction du temps constitue une fonction périodique de corrélation à la fréquence du cycle de course, et dans lequel notamment la dérivée temporelle de la fonction périodique et plus particulièrement la fonction périodique elle-même est sinusoïdale ou est une sinusoïde modulée.

9. Procédé selon l'une des revendications précédentes, dans lequel le quotient de l'amplitude maximale de la vitesse angulaire et du temps de cycle, mesuré en tr/min/s, est inférieur à 24, de préférence inférieur à 16, et notamment inférieur à 8, et/ou dans lequel la cadence, en courses/min, est supérieure à 50, de préférence supérieure à 150 et notamment supérieure à 200.

10. Procédé selon l'une des revendications précédentes, dans lequel la fonction périodique de l'angle de la came de levage en fonction du temps comprend quatre changements de direction de courbure par période.

11. Procédé selon l'une des revendications précédentes, dans lequel la tête de mortaisage est montée pivotante sur un axe et le mouvement de levage s'effectue par pivotement de la tête de mortaisage, et/ou dans lequel le mécanisme de levage présente un rouleau de pression précontraint agencé entre la came de levage et la tête de mortaisage.

12. Programme de commande doté d'instructions de commande qui, lorsqu'il est exécuté sur un dispositif de commande (99) d'une machine de mortaisage par génération, commande ladite machine de façon qu'elle réalise un procédé selon l'une des revendications précédentes.

13. Utilisation d'une came de levage rotative (10) d'un mécanisme de levage d'une machine de mortaisage par génération dans un procédé selon l'une des revendications 1 à 11, ladite came de levage étant conçue avec une première région de profil de came circonférentielle (1, 2) permettant de régler la distance relative entre la roue à mortaiser et la pièce mortaisée dans un premier mode de fonctionnement et une deuxième région de profil de came circonférentielle (2, 3 ; 1, 6) permettant de régler une telle position relative dans un deuxième mode de fonctionnement doté d'une trajectoire de mouvement relatif qui est différente de celle du premier mode de fonctionnement.

14. Utilisation selon la revendication 13, dans le cadre de laquelle la came de levage rotative présente au moins une région de profil de came (5) modifiée pour générer une modification de trace de dent et présentant un rayon non constant.

15. Machine de mortaisage par génération comportant un organe de commande présentant un programme de commande selon la revendication 12 et conçu pour réaliser un procédé selon l'une des revendications 1 à 11, lequel utilise notamment une came de levage rotative conforme à une utilisation selon la revendication 13 ou 14.
